Europäisches Patentamt

**European Patent Office**

**Office européen des brevets**

(11) Publication number: **0 095 844**
A2

# EUROPEAN PATENT APPLICATION

(21) Application number: **83302672.7**

(51) Int. Cl.³: **G 01 N 27/12**

(22) Date of filing: **11.05.83**

---

(30) Priority: **27.05.82 US 382530**

(43) Date of publication of application: **07.12.83**
**Bulletin 83/49**

(84) Designated Contracting States: **DE FR GB NL**

(71) Applicant: **HONEYWELL INC., Honeywell Plaza, Minneapolis Minnesota 55408 (US)**

(72) Inventor: **Venkatasetty, Hanumanthiya V., 12110 Red Oak Court South, Burnsville Minnesota 55337 (US)**

(74) Representative: **Riddle, John et al, Honeywell Control Systems Ltd. Patent Department Charles Square, Bracknell, Berks. (GB)**

---

(54) **Gas sensor.**

(57) A gas sensor for detecting carbon monoxide comprises an alumina substrate on which is coated a thin film of Rhodium or Ruthenium metal ($\simeq$ 200 to 500 Angstroms in thickness). As the carbon monoxide passes over the film it is chemisorbed by the metal film which changes its electrical resistance to provide an indication of concentration of the carbon monoxide.

EP 0 095 844 A2

- 1 -

## GAS SENSOR

The present invention is directed to the sensing of polar gas constituents, for example, carbon monoxide (CO), or similar chemical agents of a fluid medium such as air.

In the prior art, the sensing of CO has been widely used in industry and a number of metal oxide sensors with or without the addition of a metallic catalyst have been used. Two such examples are to be found in US Patent Nos. 4,244,918 and 4,242,303 in which various transition metal oxides are used. In other prior art the use of a thin film of $S_nO_x$ for detecting CO is taught in such articles as "A Model for the Operation of a Thin-Film $S_nO_x$ Conductance-Modulation Carbon Monoxide Sensor", by Windishmann and Mark, J. Electrochem. Soc.: Solid-State Science & Technology, Vo.126, No.4, April 1979, p627-633 and "Thick-Film CO Gas Sensors", by Nitta and Haradome, IEEE Transactions on Electron Devices, Vol.-ED26, No.3, March 1979, p247-249.

According to the present invention, there is provided a gas sensor characterized by an insulating substrate; a thin-film consisting substantially of one or more second series transition metals coated onto the substrate, the resistance of said film varying as a function of the concentration of said gas; and spaced apart electrical contacts on said film enabling the detection of said resistance variations.

One embodiment of carbon monoxide sensor according to the present invention includes a thin film of Rhodium ($\approx 200$ to 500 angstroms in thickness) deposited on the surface of an insulating substrate such as alumina or silicon dioxide. The Rhodium film may be formed on the substrate by coating or spraying a dilute solution of Rhodium chloride in an organic solvent such as tetrahydrofuran, dimethylsulfoxide or acetone. The solution is made so that Rhodium chloride concentration is in the range about 3 to 5% by weight. The solvent is driven off by a low heat ($\approx 50^{\circ}C$) in a vacuum oven. The substrate and film thereon are heated in a tube

furnace to about 150°C in the presence of hydrogen to convert the film into Rhodium metal and remove chlorine as HCl. Electrical contact with the film is provided by conductive bands which may be, for example, silver or gold deposited at spaced locations on the Rhodium film. The conductive bands provide an ohmic connection to conductors which ultimately lead to a circuit or device used to measure the resistance of the film.

A thin film of metal such as Rhodium, which has a partially filled 4$\underline{d}$ orbitals, will react strongly with a partially 2$\underline{p}$ orbitals of oxygen in carbon monoxide to form d$\pi$-p$\pi$ bonding and resulting in chemisorption. This interaction on the surface produces change in the film resistance

Referring specifically now to the element Rhodium, Rhodium is a second series transition metal with atomic number 45 and with electronic configuration of 4$\underline{d}$ and 5$\underline{s}$ orbitals - $4d^8 5s^1$. Carbon monoxide with oxygen $2P^4$ orbital configuration is reactive. The carbon monoxide has two active elements of fairly high electronegativity and the chemical agents of interest have one or more active elements of relatively high electronegativity. Rhodium can thus interact strongly with carbon monoxide by the overlap of d$\pi$ orbitals of oxygen of carbon monoxide resulting in chemisorption, of the carbon monoxide on the surface of the Rhodium metal film That is, the sensor is sensitive to CO due to the dipolar nature of CO molecule: It exhibits a larger dipole moment than do most other molecules and thus it is better adsorbed by the transition metal film. This adsorption, or chemisorption, is actually chemical bonding of the CO to the transition metal, and the bonds thus created diminish the conductivity of the transition metal. This diminished conductivity is monitored by an ohmmeter connected in circuit with conductive bands and thus provides an indication of the CO concentration at the sensor. Thin films of other transition metals like Ruthenium can also be used alone or in combination for carbon monoxide sensing.

0095844

The change in resistance is a function of the concentration of carbon monoxide. Thus in operation, the fluid including the carbon monoxide gas is passed over the Rhodium film and the increase in resistance is measured and indicates the presence or concentration of CO. Since a subsequent reduction in CO does not by itself reset the indicator, that is, the chemisorption is not automatically reversible, the chemisorbed carbon monoxide can be desorbed by elevated temperature, that is, about $120^{O}C$ so that the sensor is ready to use again. The sensor may be either externally heated or self-heated (current driven through the device to produce Joule heating) to desorb the CO.

- 4 -

CLAIMS

1. A gas sensor characterized by an insulating substrate; a thin-film consisting substantially of one or more second series transition metals coated onto the substrate, the resistance of said film varying as a function of the concentration of said gas; and spaced apart electrical contacts on said film enabling the detection of said resistance variations.

2. The gas sensor of Claim 1, characterized in that the second series transition metal is Rhodium, Ruthenium or a mixture thereof.

3. The method of detecting carbon monoxide by means of the gas sensor of Claim 1 or 2.